# EUROPÄISCHE PATENTANMELDUNG

(11) **EP 2 293 396 A2**
(43) Veröffentlichungstag der Anmeldung: **09.03.2011**
(21) Anmeldenummer: 10009030.7
(22) Anmeldetag: 31.08.2010
(51) Int. Cl.: H02G 3/00, H02G 3/16, A47B 21/00

(54) **System zur Versorgung von einzelnen Arbeitsplätzen mit Energie und Daten über Zusatzmodule**

(30) Priorität: 08.09.2009 DE 202009012168 U
(71) Anmelder: Tehalit GmbH, 67716 Heltersberg (DE)
(72) Erfinder: Schnurr, Richard, 66957 Vinningen (DE); Schmitt, Erwin, 67659 Kaiserslautern (DE)
(74) Vertreter: Patentanwälte Bitterich, Dr. Keller, Schwertfeger

(57) **Zusammenfassung**

Die Erfindung betrifft ein System zur Versorgung von einzelnen Arbeitsplätzen (2) an einem Tisch (1) mit Energie und Daten, umfassend wenigstens eine Energieleitung (8) zur Bereitstellung von Energie zur Versorgung einzelner Tischarbeitsplätze mit Energie, wenigstens eine Datenleitung (7) zur Übertragung von Daten und wenigstens eine Datensteckdose, sowie ein Netzwerk-Switch (4) zur Verteilung von Daten von und zu den einzelnen Tischarbeitsplätzen über ein Netzwerk. Jeder Tischarbeitsplatz ist mit einem separaten Zusatzmodul (20) ausgerüstet, welches ein Gehäuse (27), wenigstens eine Anschlussdose (23) zur Bereitstellung für Energie, Anschlüsse und/oder Leitungen (9) zur Übertragung von Energie sowie Anschlüsse und/oder Leitungen (10) zur Übertragung von Daten enthält.

## Beschreibung

Die vorliegende Erfindung betrifft ein System zur Versorgung von einzelnen Arbeitsplätzen an einem Tisch mit Energie und Daten gemäß dem Oberbegriff des Anspruchs 1.

In Büros oder Konferenzräumen haben die einzelnen Teilnehmer oft ihr eigenes Notebook oder andere Kommunikationsgeräte im Einsatz. Jedes einzelne Gerät benötigt Energie und ggf. einen Anschluss an ein bestehendes Netzwerk. In nicht allen Räumen oder Orten steht jedoch eine drahtlose Verbindung (z. B. Wifi, WLAN ) nicht zur Verfügung. Steckdosen für Netzgeräte stehen häufig nur in beschränkter Anzahl bereit. Der Betrieb der Arbeitsgeräte über Akkus oder Batterien ist bei mehrstündigen Konferenzen oder Besprechungen unbefriedigend, da z. B. die Akkulaufzeit bei Notebooks auf wenige Stunden beschränkt ist. Es wäre daher sinnvoll, dass jedes Arbeitsgerät an dem jeweiligen Tischarbeitsplatz an eine eigene Anschlussdose angeschlossen wird. Ferner sollte ein eigenes Netzwerkkabel von dem jeweiligen Notebook zu einer Netzwerk-Umschaltstation (Netzwerk-Switch) geführt werden. Bei einem Netzwerk-Switch handelt es sich um ein Gerät, das die Kommunikation zwischen Computern in einem Netzwerk steuert. Oft werden diese auch als "intelligente Hubs" bezeichnet. Dadurch können mehrere Netzwerkteilnehmer an ein bestehendes Netzwerk angeschlossen werden.

An vielen Tischen sind häufig keine oder zumindest nicht an jedem einzelnen Sitzplatz Steckdosen und Anschlusseinrichtungen vorhanden. In solchen Situationen wird häufig eine Verteilerleiste mit mehreren Anschlussdosen verwendet. Eine solche Vorrichtung zur Energieversorgung von Tischen ist beispielsweise in der DE 20 2006 016 371 U1 beschrieben. Unterhalb einer plattenförmigen Oberfläche, beispielsweise eines Tisches, ist eine Trageinrichtung angeordnet, die eine Mehrzahl von elektrischen Anschlussdosen trägt und mit einer wieder verschließbaren Abdeckung versehen ist. Nachteilig ist jedoch bei dieser Lösung, dass jedes einzelne Netzkabel der Netzgeräte der Arbeitsgeräte (z. B. Notebooks) oder anderen Kommunikationseinrichtungen zu einer zentralen Energieversorgungsvorrichtung geführt werden muss. Unter und auf dem Tisch entsteht ein Gewirr von Kabeln und Leitungen, die von und zu den einzelnen Geräten führen. Dies ist unbefriedigend.

Eine weitere Lösung ist in der DE 200 13 313 U1 vorgeschlagen. Es handelt sich hierbei um eine Vorrichtung und ein Zusatzmodul zum Anschließen mehrerer mobiler Kommunikationsendeinrichtungen. Hierfür ist eine Anschlussbox vorgesehen, in der die einzelnen Anschlüsse wie Strom-Steckdosen oder Netzwerkanschlüsse in Form von Anschlusseinheiten angeordnet sind. Die Anschlussbox ist mit Befestigungsmitteln zur Montage der Anschlussboxen an einer Arbeitsfläche, insbesondere einer Tischplatte versehen.

Andere Lösungen sehen vor, dass die Kabel und Leitungen über eine Öffnung an der Oberseite des Tisches nach unten geführt werden. Man vergleiche beispielsweise die DE 100 34 532 A1. Jedoch ist auch bei dieser Lösung bei mehreren Tischarbeitsplätzen ein Gewirr von Kabeln und Leitungen unterhalb der Tischplatte nicht zu vermeiden.

Es ist daher Aufgabe der vorliegenden Erfindung, eine Vorrichtung anzugeben, welche in einem Tagungs- oder Konferenzraum leicht aufbaubar und hinsichtlich der Anzahl der Teilnehmer flexibel ist, zugleich jedoch auch die Möglichkeit bietet, dass alle Komponenten zur Energie- und Datenübertragung handlich sind, d.h. leicht und schnell aufgebaut und wieder abgebaut werden können.

Diese Aufgabe wird gelöst durch ein System mit den Merkmalen des Anspruchs 1.

Das erfindungsgemäße System zur Versorgung von einzelnen Arbeitsplätzen an einem Tisch mit Energie und Daten ist mit wenigen Handgriffen an einen herkömmlichen Tisch montierbar. Dadurch können mehrere Tischarbeitsplätze an einem Tisch, der normalerweise keine Möglichkeiten zum Anschluss von Kommunikationseinrichtungen wie Notebooks oder Taschencomputer bietet, schnell und einfach mit Energie und Daten versorgt werden. Alle Bestandteile der erfindungsgemäßen Vorrichtung passen in einen Behälter, beispielsweise einen Koffer, und können innerhalb von wenigen Minuten auf-und abgebaut werden. Mit Hilfe eines erfindungsgemäßen Aufbausatzes lässt sich somit ein gewöhnlicher Tisch zu einem modernen Konferenztisch mit einzelnen Energie- und Datenanschlüssen für jeden Arbeitsplatz umwandeln.

Das erfindungsgemäße System zur Versorgung von einzelnen Arbeitsplätzen an einem Tisch mit Energie und Daten umfasst wenigstens eine Energieleitung zur Bereitstellung von Energie zur Versorgung einzelner Tischarbeitsplätze mit Energie, wenigstens eine Datenleitung zur Übertragung von Daten und wenigstens eine Datensteckdose sowie ein Netzwerk-Switch zur Verteilung von Daten von und zu den einzelnen Tischarbeitsplätzen über ein Netzwerk. Das System ist **dadurch gekennzeichnet, dass** jeder Tischarbeitsplatz mit einem separaten Zusatzmodul ausgerüstet ist, wobei jedes Zusatzmodul ein Gehäuse, wenigstens eine Anschlussdose zur Bereitstellung für Energie sowie Anschlüsse und/oder Leitungen zur Übertragung von Energie, Anschlüssen und/oder Leitungen zur Übertragung von Daten enthält.

Das Gehäuse des Zusatzmoduls besitzt in einer Ausführungsform eine oder mehrere Anschlussdosen für Energie (Stromversorgung) und einen oder mehrere Anschlüsse zur Übertragung von Daten (z.B. Netzwerkanschlüsse). Das Netzkabel der Kommunikationseinrichtungen und Netzwerkkabel werden direkt mit dem Zusatzmodul verbunden. Jeder Arbeitsplatz ist mit einem eigenen Zusatzmodul ausgerüstet. Vorzugsweise werden die einzelnen Zusatzmodule mit den Daten- und/oder Energieleitungen miteinander verbunden. In einer Ausführungsform wird die Energieleitung von einem Zusatzmodul zum anderen bis zur Anschlussdose an der Wand geführt. Datenleitungen können ebenfalls von Zusatzmodul zu Zusatzmodul bis zu einem zentralen Netzwerk-Switch geführt werden. Bei einer anderen Ausführungsform sind Energie- und Datenleitungen in einem einzelnen Kabel vereint.

Die Zusatzmodule und die zur Bereitstellung und Übertragung von Energie und Daten notwendigen Kabel und Leitungen können entweder als getrennte Einheiten vorliegen oder in dem Zusatzmodul integriert sein. Beispielsweise ist in einer Ausführungsform vorgesehen, dass die Energieleitungen und/oder Datenleitungen über einen Aufwickelmechanismus aus dem Gehäuse des Zusatzmoduls herausziehbar sind. Beim Abbau und Nichtgebrauch werden die Kabel im oder am Zusatzmodul aufgewickelt und dadurch organisiert.

Die Energieübertragungsleitung und/oder die Datenübertragungsleitung ist/sind daher vorzugsweise entweder direkt oder über ein oder mehrere in Reihe geschaltete Zusatzmodul(e) mit der Wandanschlussdose bzw. direkt mit dem Netzwerk-Switch verbunden.

Vorzugsweise enthält das Zusatzmodul wenigstens eine Datensteckdose und/oder Anschlussdose. Jedoch sind auch Varianten denkbar, bei denen sich zwei Tischarbeitsplätze ein Zusatzmodul teilen, so dass mehrere Datensteckdosen bzw. Anschlussdosen im oder am Gehäuse des Zusatzmoduls ausgebildet sein können.

In einer besonders bevorzugten Ausführungsform umfasst das Zusatzmodul wenigstens eine Kabelwickeleinrichtung zur Aufnahme von Kabeln und Leitungen, wobei die Kabelwickeleinrichtung entweder im oder am Gehäuse des Zusatzmoduls installiert ist. Vorzugsweise ist die Kabelwickeleinrichtung für Kabel und Leitungen über eine Kurbel von außen am Gehäuse des Zusatzmoduls drehbar ausgestaltet. Alternativ ist auch eine Kabelwickeleinrichtung mit einer Spiralfeder denkbar. Die Aufwicklung der Kabel oder Leitungen kann entweder über eine Kurbel oder einen Druckknopf erfolgen. Die Kabel und Leitungen können über die Kabelwickeleinrichtung bei Nichtgebrauch und Demontage leicht versorgt werden. Zur Fixierung der Kabel und Leitungen am Zusatzmodul befinden sich an der Außenseite des Gehäuses Kabelklemmen und/oder Kabelhalter. Dadurch wird ein versehentliches Abwickeln bzw. Herausziehen der Kabel und Leitungen vermieden.

Damit die Zusatzmodule einigermaßen fest am Tisch montiert werden können, befindet sich an der Unterseite des Gehäuses des Zusatzmoduls vorzugsweise ein Befestigungselement für die Tischmontage. Da die Zusatzmodule vorzugsweise für eine mobile bzw. portable Anwendung gedacht sind, handelt es sich bei dem Befestigungselement vorzugsweise um einen Saugnapf, der eine feste, aber zugleich auch wieder lösbare Verbindung zum Tisch herstellt, ohne dass ein mechanischer Eingriff notwendig wäre. Natürlich sind auch Befestigungselemente wie Klemmen oder Schrauben denkbar, die zur Fixierung des Zusatzmoduls eingesetzt werden können.

In einer Ausführungsform sind die Energieübertragungsleitungen und/oder Datenübertragungsleitungen von oder zu den einzelnen Zusatzmodulen der einzelnen Tischarbeitsplätze aus dem Gehäuse herausziehbar.

Die Anschlussdosen für Energie- und Datenübertragungsleitungen befinden sich vorzugsweise an einer Seitenwand des Gehäuses des Zusatzmoduls. Jedoch ist es auch denkbar, dass sich die Anschlüsse an der Gehäuseunterseite befinden. Daher ist in einer bevorzugten Ausführungsform am Gehäuseboden des Gehäuses eine Aufnahme ausgebildet, in die ein Anschlussstecker (z.B. für Energie und/oder Daten) und ggf. dessen zuführende Leitung bündig mit dem Gehäuseboden versenkt ist/sind.

Die Zusatzmodule, der Netzwerk-Switch sowie die Energie- und Datenübertragungsleitungen sind vorzugsweise so ausgestaltet, dass sie für einen mobilen bzw. portablen Betrieb geeignet sind. Zusatzmodule, Netzwerk-Switch sowie die Energie- und Datenübertragungsleitungen (separat oder im Zusatzmodul integriert) passen vorzugsweise in einen Koffer. Dabei können der Netzwerk-Switch und die Hauptanschlussdose fest im Koffer installiert sein, während die Zusatzmodule mit die Energie- und Datenübertragungsleitungen bei Benutzung aus dem Koffer herausgenommen und an den einzelnen Tischarbeitsplätzen installiert werden. Der Koffer dient daher sowohl als Transportbehälter als auch als Organisationseinheit für den Netzwerk-Switch und die Zusatzmodule. Die einzelnen Datenleitungen werden, ausgehend von den einzelnen Tischarbeitsplätzen, zum zentralen Netzwerk-Switch geführt. Dieser ist mit einem Netzwerkanschluss, der sich beispielsweise an der Wand des Raumes befindet, verbunden. Die Erfindung wird in den nachfolgenden Zeichnungen näher erläutert. Es zeigen:
- Fig. 1: eine typische Arbeitssituation mit Einrichtungen, wie sie im Stand der Technik bekannt sind,
- Fig. 2: eine erfindungsgemäße Ausführungsform zur Lösung der in Fig. 1 gezeigten Situation,
- Fig. 3: eine isometrische Darstellung einer Ausführungsform eines Zusatzmoduls der vorliegenden Erfindung,
- Fig. 4: das in Fig. 3 gezeigte Zusatzmodul von der Unterseite.

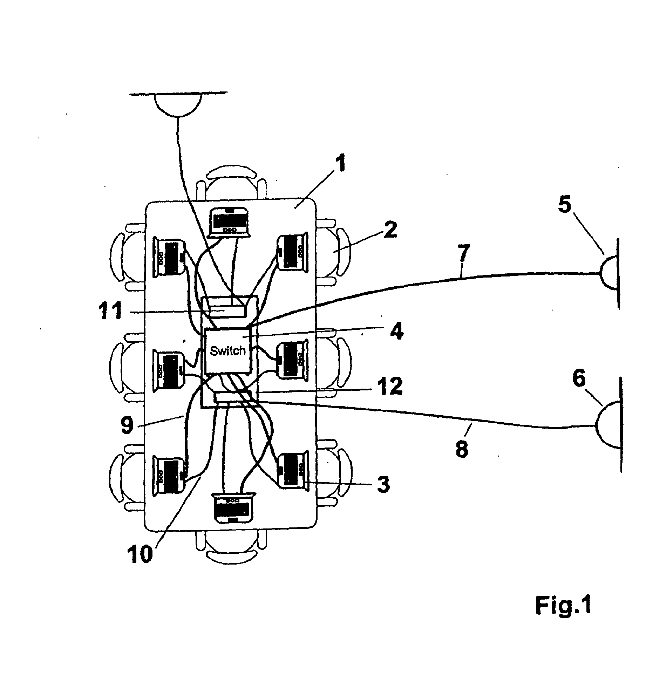

In der Fig. 1 ist die Situation des Standes der Technik gezeigt, wie sie in vielen Konferenzräumen oder Besprechungszimmern anzutreffen ist. Jeder einzelne Tischarbeitsplatz 2 eines Tisches 1 ist mit einem Notebook 3 eines Teilnehmers ausgerüstet. Vom Notebook 3 führt jeweils eine Energieleitung 10 (Netzkabel) sowie Datenleitung 9 (Netzwerkkabel) zu den jeweiligen Anschlusseinheiten. Es entsteht ein unübersichtliches Gewirr an Kabeln und Leitungen auf dem Tisch 1. Die einzelnen Energieleitungen 10 der Arbeitsgeräte führen zu einer zentralen Verteilerleiste 11. Die zentrale Verteilerleiste 11 für die Energieversorgung ist über eine Energieleitung 8 mit einer Wandanschlussdose 6 verbunden. Die Datenleitungen 9 sind mit einem zentralen Netzwerk-Switch 4 verbunden. Der Netzwerk-Switch 4 ist über eine Hauptdatenleitung 7 mit einem Netzwerkanschluss 5 verbunden. Wie bereits einleitend beschrieben, sind die Verteilerleiste 11 sowie Netzwerkanschlüsse häufig in einer zentralen Einheit 12 integriert. Dennoch besteht im Stand der Technik das Problem, dass die Zuführung der Kabel und Leitungen unübersichtlich ist.

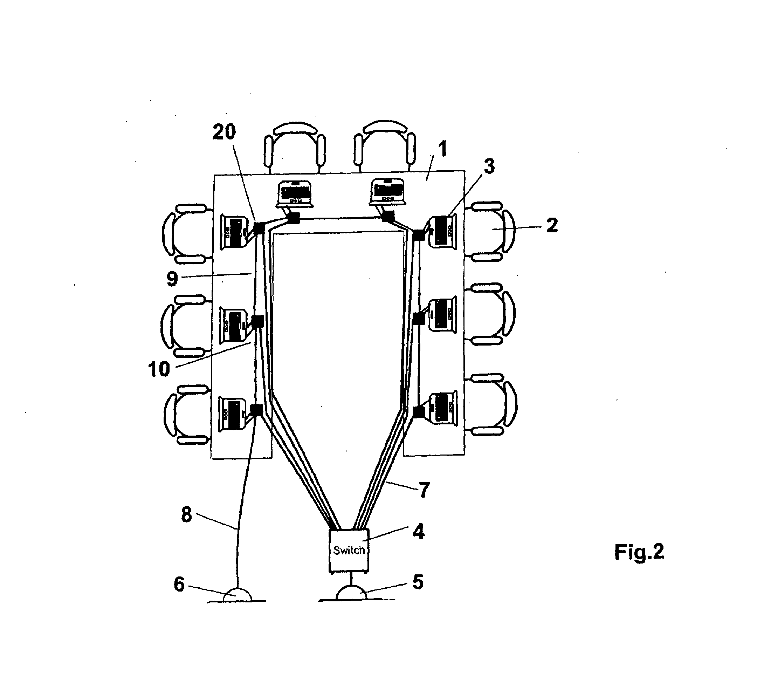

In Fig. 2 ist eine Ausführungsform der Erfindung gezeigt, um die in der Fig. 1 gezeigte Situation des Standes der Technik zu vermeiden. Der Netzwerk-Switch 4 ist wie gehabt an einen Netzwerkanschluss 5 gekoppelt. Die einzelnen Datenleitungen 7 führen zu einzelnen Zusatzmodulen 20, welche vor den einzelnen Arbeitsplätzen 2 auf dem Tisch 1 aufgestellt sind. In der gezeigten Ausführungsform hat jeder Arbeitsplatz 2 ein eigenes Zusatzmodul 20. Ferner ist es natürlich auch möglich, dass sich mehrere Arbeitsplätze 2 ein Zusatzmodul 20 teilen. Dies hängt von der Art und Menge der einzelnen Energie- und Datenanschlüsse an den jeweiligen Zusatzmodulen 20 ab.

Die Energieleitung 8 ist mit einem Zusatzmodul 20 verbunden. Die einzelnen Zusatzmodule 20 sind über einzelne Energieleitungen 10 miteinander verbunden. Die Netzkabel der Notebooks 3 führen direkt zu den einzelnen Zusatzmodulen 20.

In der gezeigten Ausführungsform führen die einzelnen Datenleitungen 7 vom Netzwerk-Switch 4 direkt zu den einzelnen Zusatzmodulen 20 des jeweiligen Arbeitsplatzes 2. Das Netzwerkkabel des Notebooks 3 ist direkt mit der Anschlussdose am Zusatzmodul 20 verbunden. Natürlich ist auch eine Ausführungsform denkbar, bei der die Datenleitungen 7 über die einzelnen Zusatzmodule 20 geführt werden. Auch ein gemeinsames Kabel für Energie- und Datenleitungen von und zu den einzelnen Zusatzmodulen ist, wie bereits erwähnt, denkbar.

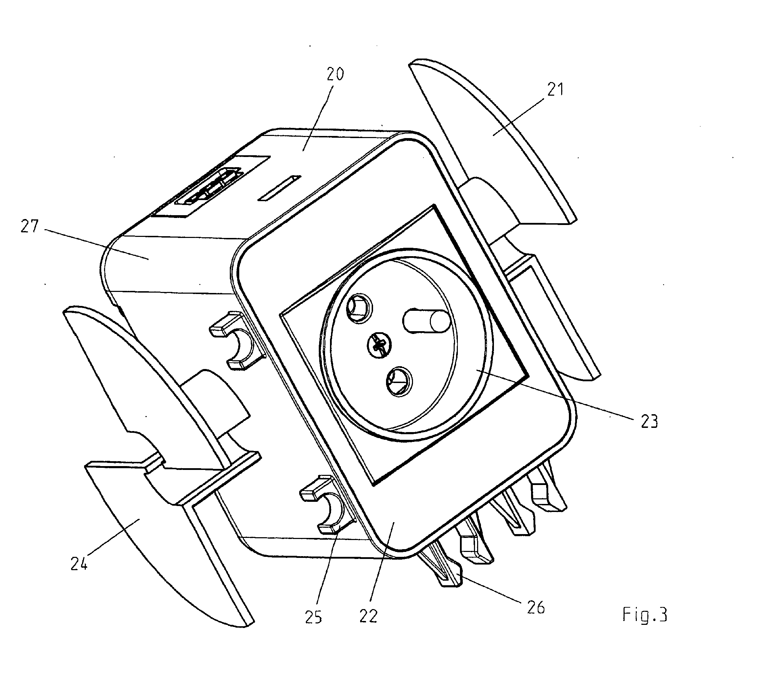

In Fig. 3 ist eine Ausführungsform eines Zusatzmoduls 20 gezeigt. An der Vorderseite befindet sich eine Anschlussdose 23 zur Energieversorgung der Arbeitsgeräte. Auf der linken Seite des Gehäuses 27 ist eine Kabelwickeleinrichtung 24 vorgesehen, welche zum Aufwickeln einer Energieleitung dienen kann. Für die Datenleitung ist auf der anderen Seite eine Kabelwickeleinrichtung 21 vorgesehen. Zur Fixierung der Kabel oder Leitungen sind Kabelklemmen 26 bzw. Kabelhalter 25 am Gehäuse 27 angebracht.

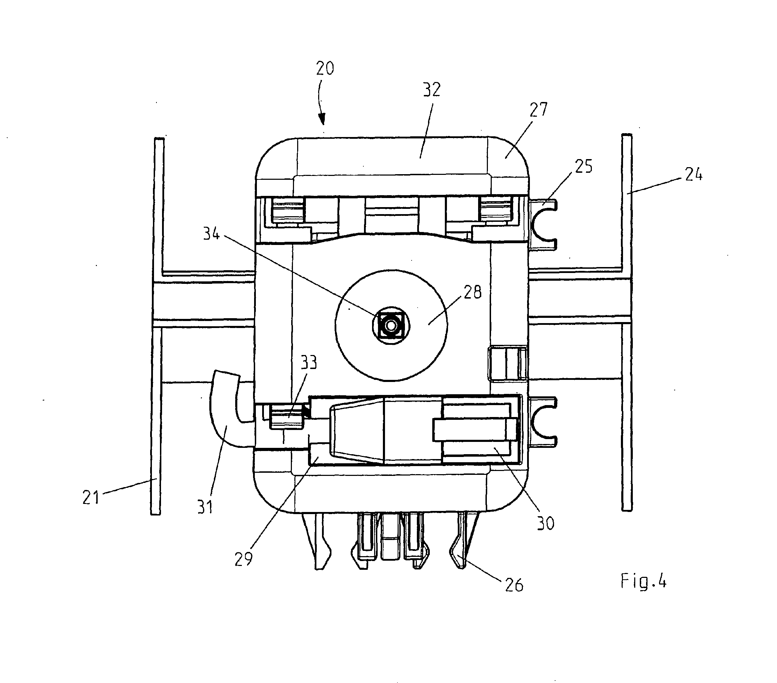

In Fig. 4 ist die Unterseite eines Zusatzmoduls 20 gezeigt. An der Gehäuseunterseite 32 befindet sich eine Befestigungseinrichtung 28, hier ausgeführt als Saugnapf. Dieser kann über herkömmliche Befestigungsmittel 34 mit dem Gehäuse 27 verbunden werden. Ebenfalls zu erkennen sind die beiden seitlichen Kabelwickeleinrichtungen 21, 24. An der Gehäuseunterseite 32 befindet sich eine Ausnehmung 29, in die ein Anschlussstecker 30 (z.B. für Energie oder Daten) bündig versenkt ist. Die Zuleitung 31 ist ebenfalls versenkt und wird über eine Nase 33 als Kabelrückhalt am Gehäuse 27 fixiert. Ebenfalls zu erkennen sind die Kabelhalter 25 sowie Kabelklemmen 26. Durch die an der Gehäuseunterseite 23 angebrachten Anschlüsse werden die Stecker und Anschlüsse vornehm kaschiert.

## Patentansprüche

1. System zur Versorgung von einzelnen Arbeitsplätzen (2) an einem Tisch (1) mit Energie und Daten, umfassend
- wenigstens eine Energieleitung (8) zur Bereitstellung von Energie zur Versorgung einzelner Tischarbeitsplätze mit Energie,
- wenigstens eine Datenleitung (7) zur Übertragung von Daten und wenigstens eine Datensteckdose,
- ein Netzwerk-Switch (4) zur Verteilung von Daten von und zu den
einzelnen Tischarbeitsplätzen über ein Netzwerk,
**gekennzeichnet durch** die Merkmale:
- jeder Tischarbeitsplatz ist mit einem separaten Zusatzmodul (20) ausgerüstet,
- jedes Zusatzmodul (20) enthält
- ein Gehäuse (27),
- wenigstens eine Anschlussdose (23) zur Bereitstellung für Energie,
- Anschlüsse und/oder Leitungen (9) zur Übertragung von Energie,
- Anschlüsse und/oder Leitungen (10) zur Übertragung von Daten,
- die Energieübertragungsleitung (9) und/oder die Datenübertragungsleitung (10) ist/sind entweder direkt oder über ein oder mehrere in Reihe geschaltete Zusatzmodul(e) (20) mit der Wandanschlussdose (6) bzw. direkt mit dem Netzwerk-Switch (4) verbunden.

2. System nach Anspruch 1, **gekennzeichnet durch** das Merkmal:
- das Zusatzmodul (20) umfasst wenigstens eine Kabelwickeleinrichtung (21, 24) zur Aufnahme von Kabeln und Leitungen, wobei die Kabelwickeleinrichtung entweder im oder am Gehäuse (27) des Zusatzmoduls (20) installiert ist.

3. System nach Anspruch 2, **gekennzeichnet durch** das Merkmal:
- die Kabelwickeleinrichtung (21, 24) für Kabel und Leitungen ist über eine Kurbel von außen am Gehäuse (27) des Zusatzmoduls (20) drehbar ausgestaltet.

4. System nach Anspruch 2 oder 3, **gekennzeichnet durch** das Merkmal:
- die Kabelwickeleinrichtung (21, 24) für Kabel oder Leitungen umfasst eine Spiralfeder zur Aufwicklung der Kabel oder Leitungen.

5. System nach einem der Ansprüche 1 bis 4, **gekennzeichnet durch** das Merkmal:
- an der Außenseite des Gehäuses (27) des Zusatzmoduls (20) befinden sich Kabelklemmen (26) und/oder Kabelhalter (25).

6. System nach einem der Ansprüche 1 bis 5, **gekennzeichnet durch** das Merkmal:
- an der Unterseite des Gehäuses (27) des Zusatzmoduls (20) ist ein Saugnapf als Befestigungselement (28) für die Tischmontage ausgebildet.

7. System nach einem der Ansprüche 1 bis 6, **gekennzeichnet durch** das Merkmal:
- die Energieübertragungsleitung (9) und/oder Datenübertragungsleitung (10) von oder zu den einzelnen Zusatzmodulen (20) der einzelnen Tischarbeitsplätze ist/sind aus dem Gehäuse (27) herausziehbar.

8. System nach einem der Ansprüche 1 bis 7, **gekennzeichnet durch** das Merkmal:
- am Gehäuseboden (32) des Gehäuses (27) ist eine Aufnahme (29) ausgebildet, in die ein Anschlussstecker (30) und gegebenenfalls dessen zuführende Leitung (31) bündig mit dem Gehäuseboden (32) versenkt ist/sind.

9. System nach einem der Ansprüche 1 bis 8, **gekennzeichnet durch** das Merkmal:
- Zusatzmodule (20), Datenverteiler (4), Energie- und Datenübertragungsleitungen (9, 10) für die einzelnen Tischarbeitsplätze sind in einem Koffer integriert.
